# EUROPÄISCHE PATENTANMELDUNG

(11) **EP 1 491 808 A1**
(43) Veröffentlichungstag der Anmeldung: **29.12.2004**
(21) Anmeldenummer: 04090245.4
(22) Anmeldetag: 21.06.2004
(51) Int. Cl.: F16L 13/14

(54) **Rohrpressverbindung**

(30) Priorität: 25.06.2003 DE 10329254
(71) Anmelder: Geberit Mapress GmbH, 40764 Langenfeld (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft eine Rohrpressverbindung bestehend aus einem Fittingelement, in das ein Leitungsrohr mit radialem Spiel einschiebbar ist und das im einschubseitigen Endbereich eines zylindrischen Abschnittes mit einem ringwulstartig ausgebildeten Abschnitt versehen ist, in dem ein Dichtelement angeordnet ist, wobei mittels einem den ringwulstartigen Abschnitt umfassenden, mindestens zwei Pressbacken aufweisenden Presswerkzeuges nach dem Ansetzen und Schließen eine unlösbare, gedichtete und gegen axiale Relatiwerschiebung gesicherte Rohrpressverbindung gebildet wird und die Pressbacken während des Verpressens sowohl auf den Ringwulstabschnitt als auch auf den zylindrisch ausgebildeten Abschnitt des Fittingelementes einwirken. Dabei ist der Ringwulstabschnitt als separates Teil (2) ausgebildet, das entweder direkt oder indirekt, in Verbindung mit dem Dichtelement (5), stoff-, kraft- oder formschlüssig mit dem zylindrisch ausgebildeten Abschnitt (3) des Fittingelementes (1) verbindbar ist.

## Beschreibung

Die Erfindung betrifft eine Rohrpressverbindung, bestehend aus einem Fittingelement und einem darin eingeschobenen Leitungsrohr gemäß dem Oberbegriff des Patentanspruches 1.

Rohrpressverbindungen als Pressfitting-System für die Hausinstallation aus Kohlenstoffstahl oder hochlegiertem Stahl sowie Kupfer sind bekannt und über viele Jahre bewährt (s. Prospekt Mapress GmbH, Lieferprogramm 4/2001). Dieses System besteht im Wesentlichen aus einem plastisch verformbaren Fittingelement, das je nach Anwendungsbereich als Bogenoder T-Stück, Muffe oder Übergangsstück ausgebildet oder mit einer Anschlussverschraubung versehen ist.

Eine gattungsbildende Rohrpressverbindung wird beispielsweise in der DE 101 18 955 C2 offenbart. Der Einschubbereich des einteilig hergestellten Fittingelementes ist als Ringwulstabschnitt ausgebildet und weist eine eine Dichtung aufnehmende Ausnehmung auf. Die Dichtung ist als ein im Querschnitt kreisförmiger Dichtring ausgebildet. An den Ringwulstabschnitt schließt sich ein sich in Längsrichtung erstreckender, zylindrisch ausgebildeter Abschnitt an, in den das Leitungsrohr bis zu einem Anschlag eingeschoben wird.

Mittels eines mindestens zwei Pressbacken aufweisenden Presswerkzeuges wird der Ringwulstabschnitt plastisch und der Dichtring elastisch verformt. Zusätzlich wird beim selben Pressvorgang im zylindrischen Bereich des Fittingelementes in unmittelbarer Nähe des Ringwulstabschnittes eine sickenförmige Vertiefung angepresst, die auch das darunter liegende eingeschobene Leitungsrohr mit erfasst.

Der elastisch verformte Dichtring übernimmt bei diesem Verbindungssystem die Dichtfunktion, während die angepresste sickenförmige Vertiefung die durch den Innendruck entstehenden Längskräfte sowie den größten Teil der Torsionsmomente aufnimmt.

Diese seit vielen Jahren bewährte Rohrpressverbindung mit Fittingelement und Leitungsrohr hat den Nachteil, dass die Herstellung eines einteiligen mit einem Ringwulstabschnitt versehenen Fittingelementes viele Umformschritte erfordert und deshalb sehr kostenaufwändig ist.

Aus der DE 100 09 739 C2 ist eine Rohrpressverbindung für besonders hohe Beanspruchungen, wie höhere Einsatztemperaturen und/oder Transport von aggressiven Medien, bekannt. Der Ringwulstabschnitt ist als separates Teil hergestellt und form-, kraft- oder stoffschlüssig mit dem übrigen Pressfittingelement verbunden.

Bei dieser bekannten Rohrpressverbindung wird die Abdichtung wegen der hohen Anforderungen ohne eine zusätzliche elastische Dichtung als rein metallische Abdichtung realisiert. Diese metallische Abdichtung erfordert eine sehr genaue Passung zwischen den die Abdichtung bildenden Anlageflächen von Ringwulstabschnitt und Rohr, um nach der Verpressung eine ausreichende Dichtwirkung zu erreichen.

Die Herstellung eines solchen Fittings für diese Spezialanwendungen ist aufwändig und teuer in der Herstellung und daher für die üblichen Anwendungen bei der Hausinstallation ungeeignet.

Aufgabe der Erfindung ist es, eine Rohrpressverbindung der gattungsgemäßen Art anzugeben, die unter Beibehaltung der bewährten Presstechnik ein in einfacher und kostengünstiger Weise herzustellendes Fittingelement verwendet.

Diese Aufgabe wird nach dem Oberbegriff in Verbindung mit den kennzeichnenden Merkmalen des Anspruchs 1 gelöst. Vorteilhafte Weiterbildungen sind Gegenstand von Unteransprüchen.

Nach der Lehre der Erfindung wird das Fittingelement nicht mehr einteilig, sondern der Ringwulstabschnitt ist als separates Teil ausgebildet, das entweder direkt oder indirekt, in Verbindung mit dem Dichtelement, stoff-, kraft- oder formschlüssig mit dem zylindrisch ausgebildeten Abschnitt des Fittingelementes verbindbar ist.
Zur einfacheren Handhabung für den Handwerker, ist der Ringwulstabschnitt je nach Ausführungsform ohne oder gemeinsam mit Dichtelement werkseitig bereits auf dem zylindrischen Abschnitt des Fittingelementes vormontiert.

Das separate Teil ist als eine eine Positionierung für das Presswerkzeug bildende Kappe ausgebildet, welche in unterschiedlichen Ausführungsformen entweder einteilig oder aus mehreren Teilen bestehend, hergestellt werden kann.

Zur Vereinfachung der Montage für den Handwerker wird in einer vorteilhaften Ausgestaltung die Kappe zur Vormontage auf den zylindrischen Abschnitt des Fittingelementes aufsteckbar ausgebildet, um ein unbeabsichtigtes Abfallen des Ringwulstabschnittes vom zylindrischen Abschnitt des Fittingelementes zu vermeiden.
Dazu ist die Kappe vorteilhaft mit einer einen Axialanschlag für das Dichtelement bildenden radialen Ausnehmung für den zylindrischen Abschnitt versehen, die den Endbereich des zylindrischen Abschnittes aufnimmt. An der Stirnseite der radialen Ausnehmung der Kappe ist vorteilhaft ein Verkrallelement angeordnet, welches die Kappe im aufgesteckten Zustand auf dem zylindrischen Abschnitt fixiert.

Bei der Vormontage wird die Kappe nur soweit auf den Endbereich des zylindrischen Abschnittes aufgesteckt, dass ein Ringspalt zwischen Stirnseite des zylindrischen Abschnittes und der den Axialanschlag in der Kappe bildenden radialen Ausnehmung verbleibt. Die Breite des Ringspaltes sollte dabei in etwa dem Querschnittsdurchmesser des Dichtringes entsprechen. In diesen verbleibenden Ringspalt wird das Dichtelement eingelegt, so das im verpressten Zustand das Dichtelement stimseitig am zylindrischen Abschnitt und am Außenumfang des Leitungsrohres abdichtend zur Anlage kommt.

Die für die Rohrpressverbindung verwendete Dichtung ist dabei vorteilhaft in einer ersten Ausführungsform als elastischer im Querschnitt kreisförmiger Dichtring ausgebildet. Es könne aber auch beliebige andere Querschnittsformen, wie z.B. Polygone oder Ellipsoide zum Einsatz kommen.

Zur Sicherstellung der korrekten Positionierung des Dichtringes ist der Axialanschlag für den Dichtring in der Kappe vorteilhaft schräg ausgebildet, so dass bei der radialen Verpressung der Dichtring durch die Schräge axial an die Stirnfläche des zylindrischen Abschnittes des Fittingelementes gedrückt wird.

Vorteil der erfindungsgemäßen Rohrpressverbindung ist, dass zur Herstellung der Verbindung als zylindrischer Abschnitt des Fittingelementes nur noch ein sehr preiswert herzustellendes abgetrenntes Rohrstück verwendet wird, das mit einem ebenfalls preiswert herzustellenden Standard- Ringwulstabschnitt verbunden wird, und so ein mit einem Leitungsrohr verpressfähiges Fittingelement entsteht. Ebenso können aber auch glattendige Standard-Muffenelemente verwendet werden, mit denen die Ringwulstabschnitte auf einfache und kostengünstige Weise verbunden werden.
Die Funktionsweise des erfindungsgemäßen Fittingelementes entspricht damit im Wesentlichen dem nach dem Stand der Technik bekannten Fittingelement, dessen Ringwulst mit dem darin angeordneten Dichtring, mindestens eine Dichtebene bildet.

Ein solcher, als Kappe ausgebildeter separater Ringwulstabschnitt kann für verschiedene standardmäßig zu verbindende Leitungsrohrdurchmesser ausgelegt werden, so dass gegenüber dem bekannten Pressfittingelement neben geringeren Fertigungskosten auch geringere Kosten für Lagerhaltung und Logistik entstehen.

Die Erfindung zeichnet sich durch den weiteren Vorteil aus, dass sie nicht nur einen Außenfitting sondern analog auch für einen Innenfitting, auf den ein Leitungsrohr aufgeschoben wird, angewendet werden kann.

Das Dichtelement kann aber auch in vorteilhafter Weise als ein auf den Endbereich des zylindrischen Abschnittes des Fittingelementes zur Vormontage aufsteckbares elastisches, ringförmiges Formteil ausgebildet sein.
Dazu ist das Formteil an der aufschubseitigen Stirnseite mit einer kreisringförmigen radialen Ausnehmung versehen, die nach dem Aufstecken den stirnseitigen Endbereich des zylindrischen Abschnittes kraft- und formschlüssig umgreift.

Zur Herstellung der Rohrpressverbindung wird die Kappe anschließend auf das Formteil bzw. den Endbereich des zylindrischen Abschnittes gesteckt und anschließend mit diesem und dem Leitungsrohr verpresst.

Nach der Verpressung liegt die Dichtung sowohl am Außenumfang, wie auch stirnseitig am zylindrischen Abschnitt des Fittingelementes und am Außenumfang des Leitungsrohres abdichtend an.
Als Werkstoffe kommen für die Kappe wahlweise aus Metall, Kunststoff oder Keramik in Frage.

Wird die Kappe aus Kunststoff oder Keramik hergestellt, hat es sich als vorteilhaft erwiesen, im Bereich der radialen Ausnehmung der Kappe ein das Dichtelement und den stimseitigen Endbereich des zylindrischen Abschnittes überdeckenden zylindrischen Pressring aus Metall anzuordnen. Dieser Pressring hat die Aufgabe, durch die plastische Deformation nach der Verpressung die Anpresskräfte des Dichtelementes am zylindrischen Abschnitt und dem Leitungsrohr dauerhaft aufrechtzuerhalten. Bei der Verwendung von Kunststoff für die Kappe kann durch Kriechvorgänge im Material die beim Verpressen erzeugte Vorspannung abgebaut werden; bei Keramik besteht möglicherweise die Gefahr, dass durch das spröde Verhalten von Keramik die erforderlichen Presskräfte nicht sicher aufgenommen werden können. Der metallische Pressring kann vorteilhaft entweder aus einem Rohrabschnitt hergestellt sein oder als sehr preiswerte Alternative aus einem ringförmig gebogenen Blechstreifen bestehen.

Es ist aber auch in einer weiteren Ausführungsform möglich die Kappe selbst zweiteilig auszuführen. Hierbei wird die Kappe aus Kunststoff hergestellt und der zylindrischen Pressring in die Kunststoffkappe integriert. Der Pressring ist in diesem Fall als ringförmige Lochscheibe ausgebildet, wobei die Lochscheibe beispielsweise durch eine im Spritzgießverfahren erzeugte Kappe integriert wird. Die Löcher in der Scheibe dienen dazu, einen innigen Verbund zwischen Metallscheibe und Kunststoff herzustellen.

Das Fittingelement und das Leitungsrohr sind vorzugsweise aus Metall, insbesondere aus C-Stahl, Edelstahl oder Kupfer hergestellt, Kunststoffe und Verbundwerkstoffe sind aber auch einsetzbar.

In einer dritten vorteilhaften Ausführungsform ist das separate Teil als ein eine Positionierung für das Presswerkzeug bildender Ringkörper ausgebildet. Bei dieser sehr preiswerten Alternative zur Herstellung einer Kappe, ist der Ringkörper als ein im Querschnitt kreisförmiger Standardring ausgebildet, der beispielsweise aus Kupfer oder Edelstahl hergestellt sein kann.
Als Dichtelement kommt vorteilhaft das bereits oben beschriebene Formteil in Betracht, wobei dieses am Außenumfang vorteilhaft eine Ausnehmung aufweist, um den Ringkörper zur Vormontage formschlüssig mit dem Formteil verbinden zu können.
Nach der Verpressung liegt die Dichtung sowohl am Außenumfang, wie auch stirnseitig am zylindrischen Abschnitt des Fittingelementes und am Außenumfang des Leitungsrohres abdichtend an.

Nach einem weiteren Merkmal kann zur Sicherstellung eines ausreichend weiten Einschubes des Leitungsrohres in das Fittingelement, der zylindrische Abschnitt mit einer einen Axialanschlag bildenden Sicke versehen sein, bis zu der das Leitungsrohr eingeschoben wird. Vorteilhaft wird die Sicke während des Abtrennens des Rohrstückes im gleichen Arbeitsgang in den zylindrischen Abschnitt eingepresst.

Weitere Merkmale, Vorteile und Einzelheiten der Erfindung ergeben sich aus der nachfolgenden Beschreibung.

Es zeigen:
- **Figur 1**: erfindungsgemäße im Längsschnitt dargestellte Rohrpressverbindung mit einem einschubseitig am Fittingelement angeordneten separaten Ringwulst mit im Querschnitt kreisförmiger Dichtung,
- **Figur 2**: wie Figur 1, jedoch mit einem Pressring und einem Formteil als Dichtung,
- **Figur 3**: wie Figur 1, jedoch mit einer zweiteilig ausgebildeten Kappe mit integriertem Pressring,
- **Figur 4**: erfindungsgemäße im Längsschnitt dargestellte Rohrpressverbindung mit einem einschubseitig am Fittingelement angeordneten separaten als Ringkörper ausgebildeter Ringwulst mit einem Formteil als Dichtung,

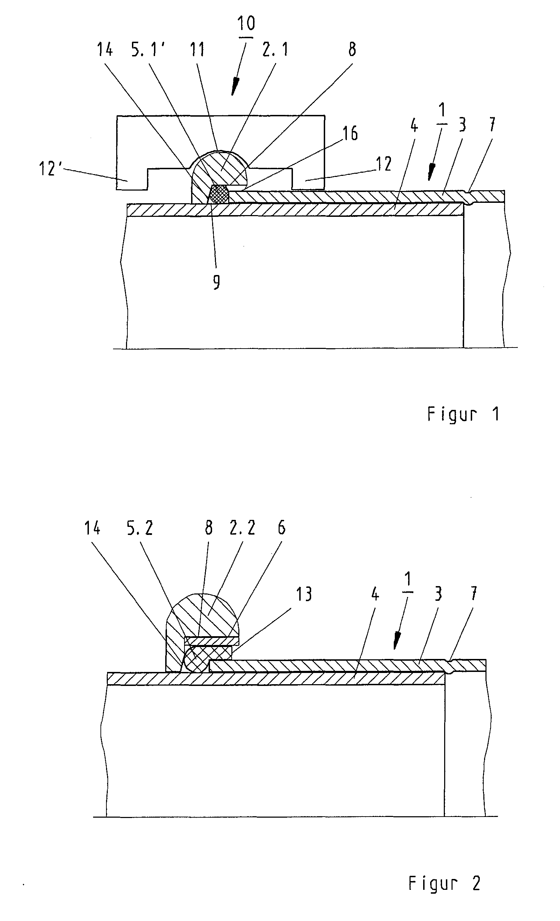

**Figur 1** zeigt eine erfindungsgemäße, im Längsschnitt dargestellte Rohrpressverbindung, mit einem einschubseitig am Fittingelement angeordneten separat hergestellten Ringwulst mit im Querschnitt kreisförmiger Dichtung.

Die Rohrpressverbindung besteht aus einem Fittingelement 1, in das ein Leitungsrohr 4 mit geringem radialem Spiel einschiebbar ist. Das Fittingelement 1 besteht erfindungsgemäß nur aus einem aus einem Rohr abgetrennten zylindrischen Abschnitt 3, an dem im einschubseitigen Endbereich als Ringwulst ein separates, als Kappe 2.1 ausgebildetes Teil 2, angeordnet ist.
Wie beim bekannten Pressfitting, bildet die erfindungsgemäße Kappe 2.1 eine Positionierung für das Ansetzen der Pressbacke 10 des hier nicht näher dargestellten Presswerkzeuges.
Das Leitungsrohr 4 ist bis zu der einen Axialanschlag für das Leitungsrohr 4 bildenden Sicke 7 im zylindrischen Abschnitt 3 des Fittingelementes 1 eingeschoben.

Die Kappe 2.1 weist eine radiale Ausnehmung 8 auf, die beim Aufstecken der Kappe auf den zylindrischen Abschnitt 3, dessen Endbereich aufnimmt. Zur Lagefixierung der Kappe 2.1 weist die dem zylindrischen Abschnitt zugewandte Stirnseite ein Verkrallelement 16 auf, welches sich nach dem Aufstecken mit dem zylindrischen Abschnitt 3 des Fittingelementes 1 verkrallt. Die Kappe 2.1 ist nur soweit auf den zylindrischen Abschnitt 3 aufgeschoben, dass sich ein Ringspalt 9 zur Stirnfläche des zylindrischen Abschnittes 3 bildet, in den ein im Querschnitt kreisringförmiger Dichtring 5.1' positioniert werden kann.

Unter Beibehaltung der bewährten Presstechnik werden zur Herstellung der Pressverbindung mindestens zwei Pressbacken 10 (hier nur eine dargestellt) eines nicht näher dargestellten Presswerkzeuges mittels einer in den Pressbacken 10 vorhandenen Ausnehmung 11 auf der Hohlkappe 2.1 aufgesetzt und diese in radialer Richtung plastisch verformt. Mit einem an der Pressbacke 10 angeordneten Presssteg 12 wird der angrenzende zylindrische Abschnitt 3 gleichzeitig plastisch mit verformt. Um beim Verpressen eine optimale Positionierung des Dichtringes 5.1' zu gewährleisten, ist der den Axialanschlag für den Dichtring 5.1' bildende Absatz der radialen Ausnehmung 8 der Kappe 2.1 in der Weise schräg gestellt, dass der Dichtring 5.1' beim radialen Stauchen der Kappe 2.1 axial gegen die Stirnfläche des zylindrischen Abschnittes 3 gedrückt wird.

Der zweite Presssteg 12' des Presswerkzeuges dient dazu, eine Pressverbindung eines benachbart liegendes Fittingelement, z. B. Muffe, ohne Drehen des Presswerkzeuges verpressen zu können.

Die Verformung der Kappe 2.1 führt durch elastische Deformation des Dichtringes 5.1' zu einer Aufpressung auf das darunter liegende Leitungsrohr 4 und der Stirnfläche des zylindrischen Abschnittes 3, so dass eine fluiddichte Verbindung hergestellt wird.

Die plastische Verformung des zylindrischen Abschnittes 3 bildet zusammen mit dem eingeschobenen Leitungsrohr 4 die axiale Sicherung der Rohrpressverbindung.

**Figur 2** zeigt eine Rohrpressverbindung wie in **Figur 1,** jedoch mit separatem Pressring und einem als Formteil ausgebildeten Dichtelement.
Zur Vormontage auf den zylindrischen Abschnitt 3 des Fittingelementes 1 ist das als Formteil 5.2 ausgebildete Dichtelement 5 aufsteckseitig mit einer radialen Ausnehmung 13 versehen. Das separate Teil 2 ist als mit einer Presshülse 6 versehenen Kappe 2.2 ausgebildet, wobei zur Vormontage entweder das Formteil 5.2 separat oder gemeinsam mit der Kappe 2.2 und dem Pressring 6 am zylindrischen Abschnitt 3 durch Aufstecken vormontiert werden kann.

Erfindungsgemäß überdeckt der Pressring 6 das Formteil 5.2 und den Endbereich des zylindrischen Abschnittes 3, so dass eine qualitätssichere dauerhafte Abdichtung gewährleistet ist.
Nach der Verpressung liegt das Formteil 5.2 sowohl am Außenumfang, wie auch stimseitig am zylindrischen Abschnitt des Fittingelementes und am Außenumfang des Leitungsrohres 4 abdichtend an, wobei über den plastisch verformten Pressring 6 ein dauerhafter Anpressdruck auf das Formteil 5.2 erzeugt und damit eine dauerhafte Dichtwirkung erreicht wird.

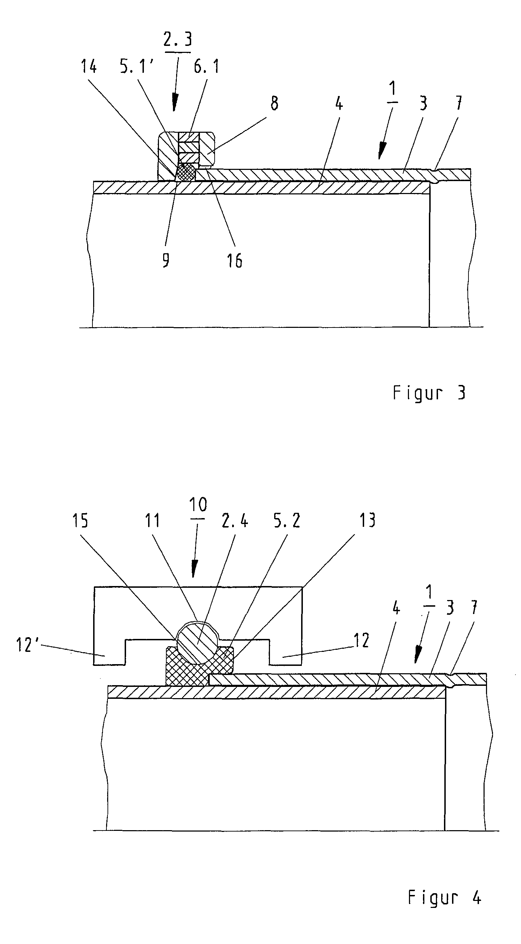

**Figur 3** zeigt eine alternative Ausgestaltung des separaten Teils 2, wobei in einer Kappe 2.3 ein als ringförmige Lochscheibe 6.1 ausgebildeter Pressring 6 integriert ist. Die Kappe 2.3 besteht aus Kunststoff, wobei im Spritzgießverfahren die Lochscheibe 6.1 integriert wurde. Die Vormontage und Verpressung geschieht wie in der zu **Figur 1 und 2** beschriebenen Verfahrensweise.

Wie in den **Figuren 1 bis 3** dargestellt, entspricht die Querschnittsausbildung der Hohlkappe 2.1, 2.2 und 2.3 im Wesentlichen der Geometrie des Wulstabschnittes bekannter einteiliger Pressfittinge, so dass die gleichen Presswerkzeuge verwendet werden können.

Wie in **Figur 4** gezeigt, kann das separate Teil 2 auch als ein im Querschnitt kreisförmiger Ringkörper 2.4 ausgebildet sein. Auch bei dieser Ausführungsform bildet der Ringkörper 2.4 eine Positionierung für das Ansetzen der Pressbacke 10 des hier nicht näher dargestellten Presswerkzeuges. Je nach Dimensionierung des Ringquerschnitts muss eventuell eine Anpassung in der Geometrie der Pressbacke 10, insbesondere der Führungsnut 11 vorgenommen werden.

Als Dichtelement 5 wird vorteilhaft das bereits oben beschriebene Formteil 5.2 verwendet, wobei dieses am Außenumfang vorteilhaft eine dem Radius des Ringkörpers entsprechende Ausnehmung 15 aufweist, um den Ringkörper 2.4 zur Vormontage formschlüssig mit dem Formteil verbinden zu können. Zur Vormontage kann entweder das Formteil 5.2 separat oder gemeinsam mit dem darauf angeordneten Ringkörper 2.4 auf den zylindrischen Abschnitt 3 des Fittingelementes 1 aufgesteckt werden.

Bei Festlegung der Positionierung des Ringkörpers 2.4 und des Formteils 5.2 im Endbereich des zylindrischen Abschnittes 3 des Fittingelementes 1 ist es wichtig, dass nach der Verpressung die Dichtung sowohl am Außenumfang, wie auch stirnseitig am zylindrischen Abschnitt 3 des Fittingelementes 1 und am Außenumfang des Leitungsrohres 4 abdichtend anliegt und eine dauerhafte Komprimierung des elastischen Formteils 5.2 sichergestellt ist.

### Bezugszeichenliste

| **Nr.** | **Bezeichnung** |
|---|---|
| 1 | Fittingelement |
| 2 | separates Teil |
| 2.1 | Kappe ohne Pressring |
| 2.2 | Kappe mit Pressring |
| 2.3 | Kappe mit integriertem Pressring |
| 2.4 | Ringkörper |
| 3 | zylindrischer Abschnitt |
| 4 | Leitungsrohr |
| 5 | Dichtelement |
| 5.1' | Im Querschnitt kreisförmiger Dichtring |
| 5.1" | Im Querschnitt ellipsoider Dichtring |
| 5.1"' | Im Querschnitt polygonaler Dichtring |
| 5.2 | ringförmiges Formteil |
| 6 | Pressring |
| 6.1 | Ringförmige Lochscheibe |
| 7 | Sicke |
| 8 | radiale Ausnehmung |
| 9 | Ringspalt |
| 10 | Pressbacke |
| 11 | Führungsnut |
| 12, 12' | Presssteg |
| 13 | radiale Ausnehmung |
| 14 | schräger Anschlag |
| 15 | Ausnehmung |
| 16 | Verkrallelement |

## Patentansprüche

1. Rohrpressverbindung bestehend aus einem Fittingelement, in das ein Leitungsrohr mit radialem Spiel einschiebbar ist und das im einschubseitigen Endbereich eines zylindrischen Abschnittes mit einem ringwulstartig ausgebildeten Abschnitt versehen ist, in dem ein Dichtelement angeordnet ist, wobei mittels einem den ringwulstartigen Abschnitt umfassenden, mindestens zwei Pressbacken aufweisenden Presswerkzeuges nach dem Ansetzen und Schließen eine unlösbare, gedichtete und gegen axiale Relatiwerschiebung gesicherte Rohrpressverbindung gebildet wird und die Pressbacken während des Verpressens sowohl auf den Ringwulstabschnitt als auch auf den zylindrisch ausgebildeten Abschnitt des Fittingelementes einwirken,
**dadurch gekennzeichnet,**
**dass** der Ringwulstabschnitt als separates Teil (2) ausgebildet ist, das entweder direkt oder indirekt, in Verbindung mit dem Dichtelement (5), stoff-, kraft- oder formschlüssig mit dem zylindrisch ausgebildeten Abschnitt (3) des Fittingelementes (1) verbindbar ist.

2. Rohrpressverbindung nach Anspruch 1
**dadurch gekennzeichnet,**
**dass** das separate Teil (2) als eine eine Positionierung für das Presswerkzeug bildende Kappe (2.1, 2.2, 2.3) ausgebildet ist.

3. Rohrpressverbindung nach Anspruch 1 und 2
**dadurch gekennzeichnet,**
**dass** die Kappe (2.1, 2.2, 2.3) zur Vormontage auf den zylindrischen Abschnitt (3) des Fittingelementes (1) aufsteckbar ausgebildet ist.

4. Rohrpressverbindung nach Anspruch 3
**dadurch gekennzeichnet,**
**dass** die Kappe (2.1, 2.2, 2.3) aufsteckseitig ein einen stimseitigen Axialanschlag für das Dichtelement (5) bildende radiale Ausnehmung (8) aufweist, wobei im aufgesteckten Zustand zur Stirnseite des zylindrischen Abschnittes (3) ein Ringspalt (9) verbleibt, in dem das Dichtelement (5) einlegbar ist.

5. Rohrpressverbindung nach einem der Ansprüche 1 - 4
**dadurch gekennzeichnet,**
**dass** das Dichtelement (5) als elastischer, im Querschnitt kreisförmiger Dichtring (5.1') ausgebildet ist.

6. Rohrpressverbindung nach einem der Ansprüche 1 - 4
**dadurch gekennzeichnet,**
**dass** das Dichtelement (5) als elastischer, im Querschnitt ellipsoider Dichtring (5.1") ausgebildet ist.

7. Rohrpressverbindung nach einem der Ansprüche 1 - 4
**dadurch gekennzeichnet,**
**dass** das Dichtelement (5) als elastischer, im Querschnitt polygonaler Dichtring (5.1''') ausgebildet ist.

8. Rohrpressverbindung nach einem der Ansprüche 1 - 7
**dadurch gekennzeichnet,**
**dass** im verpressten Zustand der Dichtring (5.1) stirnseitig am zylindrischen Abschnitt (3) und am Außenumfang des Leitungsrohres (4) abdichtend zur Anlage kommt.

9. Rohrpressverbindung nach einem der Ansprüche 1 - 4
**dadurch gekennzeichnet,**
**dass** das Dichtelement (5) als elastisches, ringförmiges Formteil (5.2) ausgebildet ist.

10. Rohrpressverbindung nach Anspruch 9
**dadurch gekennzeichnet,**
**dass** das Formteil (5.2) eine aufsteckseitig angeordnete radiale Ausnehmung (13) aufweist, wobei im verpressten Zustand das Formteil (5.2) sowohl am Außenumfang, wie auch stirnseitig am zylindrischen Abschnitt (3) und am Außenumfang des Leitungsrohres (4) abdichtend zur Anlage kommt.

11. Rohrpressverbindung nach einem der Ansprüche 1 - 10
**dadurch gekennzeichnet,**
**dass** die Kappe (2.1, 2.2) aus Metall hergestellt ist.

12. Rohrpressverbindung nach einem der Ansprüche 1 - 10
**dadurch gekennzeichnet,**
**dass** die Kappe (2.1, 2.2, 2.3) aus Kunststoff hergestellt ist.

13. Rohrpressverbindung nach einem der Ansprüche 1 - 10
**dadurch gekennzeichnet,**
**dass** die Kappe (2.1, 2.2) aus Keramik hergestellt ist.

14. Rohrpressverbindung nach einem der Ansprüche 4 - 13
**dadurch gekennzeichnet,**
**dass** im vormontierten Zustand im Bereich der radialen Ausnehmung (8) der Kappe (2.2, 2.3) ein das Dichtelement (5) und den stimseitigen Endbereich des zylindrischen Abschnittes (3) überdeckender zylindrischer Pressring (6, 6.1) angeordnet ist.

15. Rohrpressverbindung nach Anspruch 14
**dadurch gekennzeichnet,**
**dass** der zylindrische Pressring (6, 6.1) aus Metall hergestellt ist.

16. Rohrpressverbindung nach den Ansprüchen 12, 14 und 15
**dadurch gekennzeichnet,**
**dass** der zylindrische Pressring (6.1) ein in die Kunststoffkappe (2.3) integrierte ringförmige Lochscheibe ist.

17. Rohrpressverbindung nach Anspruch 1, 9 und 10
**dadurch gekennzeichnet,**
**dass** das separate Teil (2) als ein eine Positionierung für das Presswerkzeug bildender Ringkörper (2.4) ausgebildet ist.

18. Rohrpressverbindung nach Anspruch 17
**dadurch gekennzeichnet,**
**dass** das ringförmige Formteil (5.2) am Außenumfang umlaufende, eine den Ringkörper (2.4) formschlüssig aufnehmende Ausnehmung (15) aufweist.
